Europäisches Patentamt

European Patent Office

Office européen des brevets

(11) Publication number: **0 070 816**
**B1**

## EUROPEAN PATENT SPECIFICATION

(45) Date of publication of patent specification: **12.10.88**

(51) Int. Cl.⁴: **B 04 C 5/28, C 08 B 30/00**

(21) Application number: **82850136.1**

(22) Date of filing: **21.06.82**

(54) **Hydrocyclone apparatus, particularly for the production of starch.**

(30) Priority: **20.07.81 SE 8104452**

(43) Date of publication of application:
**26.01.83 Bulletin 83/04**

(45) Publication of the grant of the patent:
**12.10.88 Bulletin 88/41**

(84) Designated Contracting States:
**AT BE CH DE FR GB IT LI NL**

(56) References cited:
**FR-A-1 372 325**

**PATENTS ABSTRACTS OF JAPAN, vol. 5, no.
148 (C-72)820r, 18th September 1981; & JP - A -
56 81 149 (HITACHI SEISAKUSHO K.K.) 02-07-
1981**

(73) Proprietor: **GÖSTA LARSSONS MEKANISKA
VERKSTAD AB
PL 3882
S-290 34 Fjälkinge (SE)**

(72) Inventor: **Larsson, Knut Gösta
PI 3882
S-290 34 Fjälkinge (SE)**

(74) Representative: **Lenz, Franz et al
AWAPATENT AB Box 5117
S-200 71 Malmö (SE)**

Courier Press, Leamington Spa, England.

## Description

The present invention relates to a hydrocyclone apparatus, particularly for producing starch by centrifuging a suspension of starch and fibers in water, comprising a central block, a cover disposed adjacent one flat side of the block, a lower cover plate which bears against the opposite flat side of the block, an upper cover plate covering the flat side of the cover facing away from the block, hydrocyclones which consist each of a conical shell with open ends and a tangential inlet in the larger end and which extend between the opposite flat sides of the central block, hydrocyclone heads having central outlets and being so disposed in the flat side of the cover facing the block that they conform to the larger end of the hydrocyclones, inlet ducts which are defined by the facing flat sides of the central block and the cover and communicate with the inlets of the hydrocyclones, first outlet ducts which are defined by the facing flat sides of the central block and the lower cover plate and communicate with the smaller ends of the hydrocyclones, second outlet ducts which are defined by the facing flat sides of the cover and the upper cover plate and communicate with the outlets of the hydrocyclone heads, and means releasably holding together the central block, the cover and the cover plates.

Hydrocyclones of this general type have been used for starch production for about 25 years and are well known to the expert. Various modifications occur, as will appear for example from JP-A-5,681,149. Although having essential advantages, they also suffer from the shortcomings that they must be disassembled at short intervals (of one to two weeks) for cleaning of the inlet and outlet ducts, the hydrocyclones and the hydrocyclone heads. It is precisely to facilitate such cleaning that the ducts, the hydrocyclones and the heads are arranged in the manner defined by way of introduction, such that once the block and the plates have been disassembled all parts are exposed for flushing. The actual cleansing procedure thus causes no problem but the dismounting and in particular mounting operations are time-consuming and complicated because many sturdy clamp bolts and nuts are used to ensure tight clamping of block and plates so as to prevent flow between inlet and outlet ducts. The tightening of bolts and nuts is normally carried out by means of dynamometric wrenches so that the same abutment pressure is obtained throughout the whole area of the block and the plates. The time-consuming mounting and dismounting operations adversely affect the cost-effectiveness of the apparatus, for which reason it has long been desirable to obtain improved clamping devices.

The object of the present invention is to solve this problem such that mounting and dismounting can be effected very rapidly by means of an arrangement which will not at all or only insignificantly raise the costs of the apparatus. This object is achieved by means of the arrangement specified in the characterising clause of claim 1.

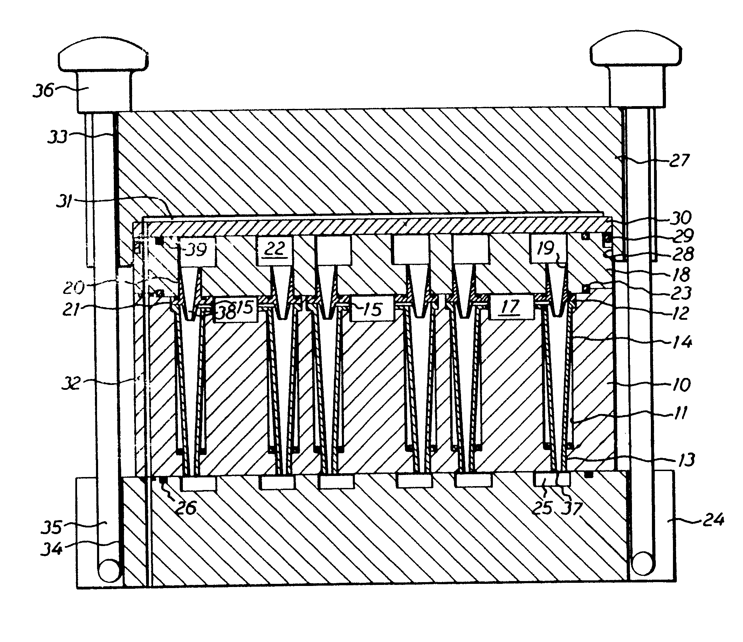

The invention will be described in greater detail hereinbelow with reference to the accompanying drawing which, in cross-section, illustrates a hydrocyclone apparatus according to the invention.

The hydrocyclone apparatus as shown in the drawing has a central block 10 which is rectangular in both horizontal and vertical section. Between the opposite flat sides of the block 10 there extend a number of through openings 11 which have a widened portion at the top, as shown at 12, and at the bottom, by a shoulder, terminate in a narrower portion 13. Hydrocyclones 14 of conventional design, consisting of a conical shell with a tangential inlet opening 15 at the wider end, are disposed in the openings 11 such that their lower narrower ends 37 are located on a level with the underside of the block 10 while their upper end portions are located in the widened portion 12 of the openings 11 with the upper boundary surface below the upper flat side of the block 10. The tangential inlet openings 15 of the hydrocyclones communicate with inlet ducts 17 which are provided in the upper flat side of the block 10. On the block 10 there is placed a cover 18 which has openings 19 conformed to the openings 11 in the block 10. Hydrocyclone heads 20 stand with a cylindrical portion into these openings 19 and abut with a flange 21 on the flat side of the cover 18 which faces the block 10. The cylindrical portion of the heads terminates on the other side of the flange in a tapering projection 38. Through each hydrocyclone head there extends a central opening conically tapering in the same direction as the hydrocyclone body 14. The central opening of the hydrocyclone heads communicates with outlet ducts 22 provided in the flat side of the cover 18 remote from the block 10. The expert in the art is substantially acquainted with this arrangement of block 10, cover 18, hydrocyclones 14 and hydrocyclone heads 20.

The central block 10 is disposed on a lower cover plate 24 which is of slightly larger dimensions in the horizontal plane than the block 10. The plate 24 has in its flt side facing the block 10 a number of outlet ducts 25 which are so arranged that each hydrocyclone 14 opens in such a duct with its narrower end 37. A corresponding upper cover plate 27 whose dimensions in the horizontal plane also slightly exceed the corresponding dimensions of the central block has in one flat side a recess 28 whose dimensions in the horizontal plane correspond to those of the cover 18, so that the upper end of the cover is insertable therein with a suitable fit and sealed against the wall of the recess 28 by means of a circumferential O-ring 29. A pressure plate 30 is disposed between the flat side of the cover 18 facing away from the block 10 and the bottom of the recess 28. The recess 28, along its periphery and adjacent its bottom, has a narrow shoulder so as to form a space 31 between the flat side of the pressure plate 30 remote from the cover 18 and the bottom of the recess 28. This space communicates with the exterior of the apparatus through a conduit 32 extending through the plate 30, the cover 18, the block 10 and the lower cover plate 24. A gasket 26 is mounted in a recess in the flat side of the plate 24 facing the block 10 to ensure sealing against the block and, to the same end, the cover 18 has gaskets 23 and 39 in recesses in its opposite flat sides to seal against the block 10 and the pressure plate 30, respectively. Through a number of registering openings 33 and 34 in the plates 27 and 24, there extend clamp bolts 35 with threaded ends, on which knobs or wheels 36 are screwed to make it possible, by tightening the knobs 36, to assemble the component parts of the hydrocyclone apparatus.

It is assumed that the illustrated hydrocyclone apparatus is to be used for producing starch by centrifuging a suspension of starch and fibers in water. For mounting the apparatus, the plate 24 is first placed on a base and the block is then disposed on the flat side of the plate 24 which is provided with the outlet ducts 25, it being possible to make use of guide means to ensure that the block 10 is brought into the correct position with respect to the plate 24 and all the hydrocyclone outlets 37 communicate each with an outlet duct 25. The cover 18 is thereafter mounted in place, the hydrocyclone heads protruding from the flat side of the cover fitting into the hydrocyclones 14 in the block 10 in the manner shown in the drawing. The tangential inlet duct 15 will then also be delimited in the upward direction and the inlet ducts 17 will be closed. The pressure plate 30 is thereafter applied onto the cover 18, thus closing the outlet ducts 22. Then, the upper cover plate 27 is passed over the cover 18 with the pressure plate 30, such that the upper portion of the cover and the pressure plate 30 are introduced in the recess 28 of the plate 27 until the pressure plate 30 engages the shoulder adjacent the bottom of the recess 28, i.e. until it has assumed the position shown in the drawing. The thus mounted parts are then clamped together by means of the bolts 35 and the knobs 36. This manual clamping of the parts is by no means sufficient to ensure a tight engagement between the different flat sides to prevent an undesired suspension flow from the inlet ducts to the outlet ducts. For exertion of the required pressure, the conduit 32 is connected to a source for a pressurized medium, preferably water, which will thus flow into the space 31 to establish a pressure therein urging the pressure plate 30 towards the cover 18 and the block 10. It is obvious that by applying a suitable pressure one easily obtains the desired sealing between the surfaces and between cyclones and cyclone heads, the sealing effect being equally distributed throughout the entire area of the cover 18.

Said suspension is charged through the inlet ducts 17 and from there flows into the hydrocyclones by their tangential inlets 15, whereby the suspension will be imparted a rotational movement along the hydrocyclone wall, which results in that the heavier starch particles will slide down along the inner surface of the hydrocyclones and be received in the outlet ducts 25, whereas the lighter fibers will flow out through the central openings of the hydrocyclone heads to be discharged through the outlet ducts 22.

After some time of operation, the apparatus must be disassembled for cleaning, which is simply carried out in that the pressure in the space 31 is caused to cease, the knobs 36 are loosened and the different parts are separated and flushed. The parts are then reassembled in the manner described above and the apparatus is again ready for operation. Thus, the waste of time will become insignificant as opposed to such cases as require clamping the parts by means of a number of bolts and nuts.

It is of course very essential that the pressure plate 30 be activated before suspension is supplied to the inlet ducts 17, for which reason a convential pressostat is preferably disposed in the supply conduit for the pressure medium acting in the space 31. This pressostat thus prevents any feed of suspension before the correct pressure has been established in the space 31 and the parts of the apparatus have been brought into sealing engagement with each other.

Most of the apparatuses of the above-defined type have hitherto been manufactured of metal, but the apparatus according to the invention is advantageously made of plastic material, in particular rigid polyurethane. Further, the apparatus is shown with horizontal plates and block but in actual practice it is most often mounted with these parts vertical.

**Claims**

1. A hydrocyclone apparatus, particularly for producing starch by centrifuging a suspension of starch and fibers in water, comprising a central block (10), a cover (18) disposed adjacent one flat side of the block, a lower cover plate (24) which bears against the opposite flat side of the block, an upper cover plate (27) covering the flat side of the cover facing away from the block, hydrocyclones (14) which consist each of a conical shell with open ends and a tangential inlet (15) in the larger end and which extend between the opposite flat sides of the central block, hydrocyclone heads (20) having central outlets (38) and being so disposed in the flat side of the cover facing the block that they conform to the larger end of the hydrocyclones, inlet ducts (17) which are defined by the facing flat sides of the central block and the cover and communicate with the inlets of the hydrocyclones, first outlet ducts (25) which are defined by the facing flat sides of the central block and the lower cover plate and communicate with the smaller ends (37) of the hydrocyclones, second outlet ducts (22) which are defined by the facing flat sides of the cover and the upper cover plate and communicate with the outlets (38) of the hydrocyclone heads, means (35, 36) releasably holding together the central block, the cover and the cover plates, characterised in that the upper cover plate (27) bears against the cover (18) through a pressure plate (30) which is disposed in a recess (28) in the upper cover plate (27), one flat side of said pressure plate covering the major portion of the flat side of the cover (18) facing away from the central block, and that a pressure fluid can be supplied by a supply conduit (32) to the space (31) between the other flat side of the pressure plate (30) and the bottom of the recess (28) to press the pressure plate towards the cover for tightly clamping said flat sides of the central block (10), the cover (18) and the cover plates (24, 27).

2. Apparatus as claimed in claim 1, characterised in that a pressostat is disposed in the pressure fluid supply conduit (32) to prevent the supply of suspension to the inlet ducts (17) before the flat sides of the central block (10), the cover (18) and the cover plates (24, 27) have been clamped together.

## Patentansprüche

1. Hydrozyklonvorrichtung, insbesondere zur Herstellung von Stärke durch Zentrifugieren einer Suspension aus Stärke und Fasern in Wasser, umfassend einen Zentralblock (10), einen an der einen flachen Seite des Blocks angeordneten Deckel (18), eine untere Abdeckplatte (24), die sich gegen die entgegengesetzte, flache Seite des Blocks abstützt, eine obere Abdeckplatte (27), die die vom Block abgewandte, flache Seite des Deckels abdeckt, Hydrozyklone (14), die je aus einer konischen Schale mit offenen Enden und einem tangentialen Einlauf (15) im grösseren Ende bestehen und sich zwischen den entgegengesetzten flachen Seiten des Zentralblocks erstrekken, Hydrozyklonköpfe (20), die zentrale Auslässe (38) besitzen und derart in der dem Block zugewandten, flachen Seite des Deckels angeordnet sind, dass sie dem grösseren Ende der Hydrozyklone angepasst sind, Einlasskanäle (17), die von den einander zugewandten, flachen Seiten des Zentralblocks und des Deckels abgegrenzt sind und mit den Einläufen der Hydrozyklone in Verbindung stehen, erste Auslasskanäle (25), die von den einander zugewandten, flachen Seiten des Zentralblocks und der unteren Abdeckplatte abgegrenzt sind und mit den kleineren Enden (37) der Hydrozyklone in Verbindung stehen, zweite Auslasskanäle (22), die von den einander zugewandten, flachen Seiten des Deckels und der oberen Abdeckplatte abgegrenzt sind und mit den Auslässen (38) der Hydrozyklonköpfe in Verbindung stehen sowie Mittel (35, 36), die den Zentralblock, den Deckel und die Abdeckplatten lösbar zusammenhalten, dadurch gekennzeichnet, dass die obere Abdeckplatte (27) gegen den Deckel (18) über eine Druckplatte (30) enliegt, die in einer Vertiefung (28) in der oberen Abdeckplatte (27) angebracht ist und deren eine flache Seite den Hauptteil der vom Zentralblock abgewandten, flachen Seite des Deckels (18) abdeckt, und dass durch eine Zufuhrleitung (32) ein Druckfluid dem Raum (31) zwischen der anderen flachen Seite der Druckplatte (30) und dem Boden der Vertiefung (28) zugeführt werden kann, um die Druckplatte gegen den Deckel anzupressen, so dass die flachen Seiten des Zentralblocks (10), des Deckels (18) und der Abdeckplatten (24, 27) fest zusammengespannt werden.

2. Vorrichtung nach Anspruch 1, dadurch gekennzeichnet, dass in der Zufuhrleitung (32) für das Druckfluid ein Pressostat angebracht ist, welcher verhindert, dass den Einlasskanälen (17) Suspension zugeführt wird, bevor die flachen Seiten des Zentralblocks (10), des Deckels (18) und der Abdeckplatten (24, 27) zusammengespannt worden sind.

## Revendications

1. Dispositif à hydrocyclones, destiné particulièrement à produire de l'amidon par centrifugation d'une suspension d'amidon et de fibres dans l'eau, comprenant un bloc central (10), un couvercle (18) disposé adjacent à une face plate du bloc, une plaque de fermeture inférieure (24) qui porte contre la face plate opposée du bloc, une plaque de fermeture supérieure (27) qui couvre la face plate du couvercle qui tourne le dos au bloc, des hydrocyclones (14) dont chacun est composé d'un corps conique muni d'extrémités ouvertes et d'une entrée tangentielle (15) dans sa grande extrémité, et qui s'étendent entre les faces plates opposées du bloc central, des têtes d'hydrocyclones (20) présentant des sorties centrales et étant disposées dans la face plate du couvercle qui regarde le bloc de manière à s'adapter à la grande extrémité des hydrocyclones, des conduits d'entrée (17) qui sont définis par les faces plates opposées face à face du bloc central et du couvercle et qui communiquent avec les entrées des hydrocyclones, des premiers conduits de sortie (25) qui sont définis par les faces plates opposées face à face du bloc central et de la plaque de fermeture inférieure et qui communiquent avec les petites extrémités (37) des hydrocyclones, des deuxièmes conduits de sortie (22) qui sont définis par les faces plates opposées face à face du couvercle et de la plaque de fermeture supérieure et qui communiquent avec les sorties (38) des têtes des hydrocyclones et des moyens (35, 36) servant à maintenir le bloc central, la couvercle et les plaques de fermeture assemblés par des liaisons démontables, caractérisé en ce que la plaque de fermeture supérieure (27) porte contre le couvercle (18) à travers une plaque de pression (30) qui est disposée dans un évidement (28) ménagé dans la plaque de fermeture supérieure (27), une face plate de ladite plaque de pression couvrant la majeure partie de la face plate du couvercle (18) qui tourne le dos au bloc central, et en ce qu'un fluide de pression peut être envoyé, par un conduit d'alimentation (32), à l'espace (31) compris entre l'autre face plate de la plaque de pression (30) et le fond de l'évidement (28), afin de presser la plaque de pression vers le couvercle pour serrer lesdites faces plates du bloc central (10), du couvercle (18) et des plaques de fermeture (24, 27) les unes contre les autres à joint étanche.

2. Appareil selon la revendication 1, caractérisé en ce qu'un pressostat est intercalé dans le conduit d'arrivée de fluide de pression (32) pour interdire l'envoi de la suspension aux conduits d'entrée (17) tant que les faces plates du bloc central (10), du couvercle (18) et des plaques de fermeture (24, 27) n'ont pas été serrées les unes contre les autres.